# EUROPEAN PATENT SPECIFICATION

(11) **EP 1 583 805 B1**
(45) Date of publication and mention of the grant of the patent: **28.02.2007**
(21) Application number: 04702231.4
(22) Date of filing: 14.01.2004
(51) Int. Cl.: C09D 11/00

(54) **INKJET INK SET AND METHOD OF USING SAME**
TINTENSTRAHLDRUCKTINTENKOMBINATION SOWIE DEREN VERWENDUNG
ENSEMBLE D'ENCRES POUR UNE IMPRIMANTE ET SON PROCEDE D'UTILISATION

(30) Priority: 16.01.2003 US 440493 P; 25.02.2003 US 449760 P
(43) Date of publication of application: 12.10.2005
(73) Proprietor: E.I. DU PONT DE NEMOURS AND COMPANY, Wilmington, DE 19898 (US)
(72) Inventor: JACKSON, Christian, Wilmington, Delaware 19808 (US); WOLFE, Michael, Stephen, Wilmington, Delaware 19803 (US)
(74) Representative: Morf, Jan Stefan
(86) International application number: PCT/US2004/001074
(87) International publication number: WO 2004/065501

(56) References cited:
- EP-A- 0 534 634
- EP-A- 0 778 321
- EP-A- 1 125 994
- EP-A- 1 172 225
- EP-A- 1 191 077

## Description

This invention pertains to an ink set for inkjet printing, in particular to an ink set comprising at least one ink containing a self-dispersing pigment colorant together with a soluble polymer binder or an effective amount of a multivalent cation, and a fixer fluid containing copper salt. The invention also pertains to a method of inkjet printing with this ink set.

Inkjet printing is a non-impact printing process in which droplets of ink are deposited on print media, such as paper, to form the desired image. The droplets are ejected from a printhead in response to electrical signals generated by a microprocessor.

Both dyes and pigments have been used as colorants for inkjet inks. While dyes are typically easier to formulate compared to pigments, they tend to fade quickly and are more prone to rub off. Inks comprising pigments dispersed in aqueous media are advantageously superior to inks using water-soluble dyes in water-fastness and light-fastness of printed images.

Pigments suitable for aqueous inkjet inks are in general well-known in the art. Traditionally, pigments were stabilized by dispersing agents, such as polymeric dispersants or surfactants, to produce a stable dispersion of the pigment in the vehicle. More recently though, so-called "self-dispersible" or "self-dispersing" pigments (hereafter "SDP") have been developed. As the name would imply, SDPs are dispersible in water without dispersants.

SDPs are often advantageous over traditional dispersant stabilized pigments from the standpoint of greater stability and lower viscosity at the same pigment loading. This can provide greater formulation latitude in final ink.

One disadvantage of inkjet printers is the relatively slow speed compared to, for example, laser printers. The slow speeds are due in large part to the relatively slow dry time of inkjet inks as well as slow-down due to bleed control algorithms in the printer software.

Among the proposed solutions to faster print speeds is the formulation of inks for "fast drying" by inclusion of ingredients such as surfactants or other penetrants. These ingredients can indeed improve dry times and in certain formulations reduce bleed, but edge acuity and optical density usually suffer.

In order to get the ink to dry fast the vehicle has to absorb rapidly into the paper. The vehicle also carries the colorant further into the paper resulting in lower OD and higher strike-through. Self-dispersed pigments alleviate the problem to some extent as they "crash" or precipitate sooner than conventionally dispersed pigments and so are not carried as far into the paper. However there is still a significant drop in OD when using a penetrating vehicle.

A fixing solution applied prior to the ink can be used to precipitate the pigment in a pigmented ink, increasing OD. But this leads to a noticeable drop in rub fastness because the pigment remains close to the surface and is more susceptible to abrasion. Addition of polymer binder can improve rub-fastness but tends to decrease OD, presumably because it helps shield the pigment from the effect of the fixer.

Ideally, therefore, it would seem that ink/fixer combinations could give high OD and good rub-fastness in systems where the ink vehicle is highly penetrating (fast drying).

US5746818 discloses the combination of ink and reaction solution wherein the ink contains SDP and a certain glycol ether, and the reaction solution contains a cationic material or salt.

US6450632 discloses the combination of ink and underprinting fixing fluid wherein the ink contains a macromolecular chromophore (SDP) having a zeta potential of 100-900 millivolts, and the fluid contains a cationic component.

US20020044185 discloses the combination of an ink and treatment fluid wherein the ink contains an SDP and a pigment with polymeric dispersant, and the fluid contains a multivalent metal ion.

EP1258510 discloses the combination of ink and fixing fluid wherein the ink contains dye or pigment and an effective amount of polyvinyl(alcohol-acetate), and the fixing fluid contains a fixing agent which gels the polyvinyl(alcohol-acetate).

EP 1 191 077 discloses a composition comprising 1) a color ink containing a pigment, and 2) a liquid composition comprising a polyvalent metal salt, a material selected from acids and salts thereof, and a liquid medium.

EP 1 172 225 describes a composition comprising 1) an ink containing a first self-dispersing pigment having anionic groups, a second pigment and a polymeric dispersant, and 2) a treatment liquid containing a polyvalent metal ion.

EP 1 125 994 discloses a composition comprising 1) an ink containing a pigment having carboxy groups, and 2) a liquid solution of a polyvalent metal salt of aldonic acid.

The aforementioned disclosures are incorporated by reference herein for all purposes as if fully set forth.

A need still exists for improved inkjet ink sets that allow increased print speeds while maintaining good print quality.

### SUMMARY OF THE INVENTION

In accordance with a first aspect of the present invention, there is provided an inkjet ink set comprising:
a first ink comprising a self-dispersing pigment colorant dispersed in a first aqueous vehicle; and
a fixing fluid comprising a soluble copper salt in a second aqueous vehicle,
wherein the first ink further comprises a soluble polymer binder or/and an effective amount of a multivalent cation.

Preferably, the ink set comprises, in addition to the fixing fluid, at least two differently colored aqueous inks, and more preferably at least four differently colored aqueous inks (such as CMYK), at least one of the colored inks being a first ink as described above and, more preferably, wherein the colorants in the colored inks comprise pigments.

Also preferably the self-dispersing pigment colorant in the first ink comprises a self-dispersing carbon black pigment.

Also preferably the fixing fluid when printed leaves no visible marking, and/or is substantially colorless.

In accordance with another aspect of the present invention, there is provided a method of inkjet printing a substrate comprising the steps of jetting an ink set onto a substrate, the ink set comprising the ink set as set forth above.

In accordance with another aspect of the present invention, there is provided a method of inkjet printing a substrate comprising the steps of:
jetting onto an area of the substrate, in an area fill, a fixing fluid comprising a soluble copper salt in a second aqueous vehicle; and
jetting onto at least a portion of the area fill of the fixing fluid, a first ink comprising a self-dispersing pigment colorant dispersed in a first aqueous vehicle, wherein the first ink further comprises a soluble polymer binder or/and an effective amount of an multivalent cation.

Preferably the fixing fluid is jetted onto the substrate before the first ink. Further, the area fill of the fixing fluid is preferably less than the area fill of the first ink, more preferably substantially less. Further, it is preferred that areas of the substrate covered with the fixing fluid are subsequently substantially covered by the first ink, that is, substantially no uncovered fixing fluid.

These and other features and advantages of the present invention will be more readily understood by those of ordinary skill in the art from a reading of the following detailed description. It is to be appreciated that certain features of the invention which are, for clarity, described above and below in the context of separate embodiments, may also be provided in combination in a single embodiment. Conversely, various features of the invention that are, for brevity, described in the context of a single embodiment, may also be provided separately or in any subcombination. In addition, references in the singular may also include the plural (for example, "a" and "an" may refer to one, or one or more) unless the context specifically states otherwise.

### DETAILED DESCRIPTION OF THE PREFERRED EMBODIMENTS

According to the present invention, an ink comprising a pigment, aqueous vehicle and soluble binder or multivalent cations, and optionally other additives and adjuvants well-known in the relevant art, is applied to a substrate in combination with a fixer (fixing) fluid comprising a soluble copper salt. Preferably, the fixer fluid is applied to the substrate first and then the ink is printed on top of the applied fixer. As described herein after, the fixer fluid need not fill the entire printed area to be effective. In fact, the area filled by the fixer can be a fraction of the area covered by the ink, as discussed in further detail below.

### Colorant

The colorant in the inks of present invention comprises a pigment. By definition, pigments do not form (to a significant degree) a solution in the aqueous vehicle and must be dispersed.

The pigment colorants in the first ink(s) of the present invention are more specifically self-dispersing pigments. SDPs are surface modified with dispersibility imparting groups to allow stable dispersion without separate dispersant. For dispersion in aqueous vehicle, the surface modification involves addition of hydrophilic groups and most typically ionizable hydrophilic groups. See, for example, US5554739, US5571311, US5609671, US5672198, US5698016, US5707432, US5718746, US5747562, US5749950, US5803959, US5837045, US5846307, US5851280, US5861447, US5885335, US5895522, US5922118, US5928419, US5976233, US6057384, US6099632, US6123759, US6153001, US6221141, US6221142, US6221143, US6277183, US6281267, US6329446, US6332919, US6375317, US2001/0035110, EP-A-1086997, EP-A-1114851, EP-A-1158030, EP-A-1167471, EP-A-1122286, WO01/10963, WO01/25340 and WO01/94476, the disclosures of which are incorporated by reference herein for all purposes as if fully set forth.

The SDP colorant can be further defined by its ionic character. Anionic SDP yields, in aqueous medium, particles with anionic surface charge. Conversely, cationic SDP yields, in aqueous medium, particles with cationic surface charge. Particle surface charge can be imparted, for example, by attaching groups with anionic or cationic moieties to the particle surface. The SDP of the present invention are preferably anionic.

Anionic moieties attached to the anionic SDP surface can be any suitable anionic moiety but are preferably (I) or (II):

-CO₂Z (I)

-SO₃Z (II)

wherein Z is selected from the group consisting of conjugate acids of organic bases; alkali metal ions; "onium" ions such as ammonium, phosphonium and sulfonium ions; and substituted "onium" ions such as tetraalkylammonium, tetraalkyl phosphonium and trialkyl sulfonium ions; or any other suitable cationic counterion. Useful anionic moieties also include phosphates and phosphonates. Most preferred are type I ("carboxylate") anionic moieties.

Also preferred is a degree of functionalization wherein the density of anionic groups is less than about 3.5 µmoles per square meter of pigment surface (3.5 µmol/m²), more preferably less than about 3.0 µmol/m². Degrees of functionaliztion of less than about 1.8 µmol/m², and even less than about 1.5 µmol/m², are also suitable and may be preferred for certain specific types of SDP's. As used above and otherwise herein, "degree of functionalization" refers to the amount of hydrophilic groups present on the surface of the SDP per unit surface area, measured in accordance with the method described further herein.

Related to the surface treatment, the zeta potential is preferably less than about 120 millivolts and more preferably less than about 100 millivolts.

Carboxylated anionic SDP species include those described, for example, in previously incorporated US5571311, US5609671 and WO01/94476; and, sulfonated (type II) SDPs include those described, for example, in previously incorporated US5571331, US5928419 and EP-A-1146090.

It is desirable to use small colorant particles for maximum color strength and good jetting. The particle size may generally be in the range of from about 0.005 micron to about 15 microns, is typically in the range of from about 0.005 to about 1 micron, is preferably from about 0.005 to about 0.5 micron, and is more preferably in the range of from about 0.01 to about 0.3 micron.

The levels of SDPs employed in the instant inks are those levels that are typically needed to impart the desired OD to the printed image. Typically, SDP levels are in the range of about 0.01 to about 10% by weight of the ink.

The SDPs may be black, such as those based on carbon black, or may be colored pigments such as those based on PB 15:3 and 15:4 cyan, PR 122 and 123 magenta, and PY 128 and 74 yellow.

The SDPs may be prepared by grafting a functional group or a molecule containing a functional group onto the surface of the pigment, or by physical treatment (such as vacuum plasma), or by chemical treatment (for example, oxidation with ozone, hypochlorous acid or the like). A single type or a plurality of types of hydrophilic functional groups may be bonded to one pigment particle. The type and the degree functionalization may be properly determined by taking into consideration, for example, dispersion stability in ink, color density, and drying properties at the front end of an ink jet head. Further details may be found by reference to the numerous publications incorporated above.

In one preferred embodiment, the hydrophilic functional group(s) on the SDP are primarily carboxyl groups, or a combination of carboxyl and hydroxyl groups; even more preferably the hydrophilic functional groups on the SDP are directly attached and are primarily carboxyl groups, or a combination of carboxyl and hydroxyl.

Preferred pigments in which the hydrophilic functional group(s) are directly attached may be produced, for example, by a method described in previously incorporated WO01/94476. Carbon black treated by the method described in this publication has a high surface active hydrogen content which is neutralized with base to provide very stable dispersions in water. Application of this method to colored pigments is also possible.

### Multivalent Cation

The first ink(s) used in accordance with this invention can, in accordance with one embodiment, comprise an effective amount of one or more multivalent cations. The effective amounts needed in a particular situation can vary, and some adjustment will generally be necessary.

The multivalent cations can be added in an "effective amount", or the total amount of multivalent cation(s) in the first ink(s) can be adjusted to an "effective amount" such that the optical density of the printed ink is greater with said adjusted level of multivalent cation(s), and/or the stability of said aqueous inkjet ink is enhanced, as compared to without said adjusted level.

As used above and otherwise herein, an "effective amount" of a multivalent cation is an amount required to achieve an improvement of the optical density of the printed ink. In the context of simply adding a multivalent cation, the improvement is compared to an ink without the presence of the multivalent cation. In the context of adjusting the amount of multivalent cation, the improvement is compared to the unadjusted level of the multivalent cation.

"Multivalent" indicates an oxidation state of two or more and, for an element "Z", are typically described as Z²⁺, Z³⁺, Z⁴⁺ and so forth. For brevity, multivalent cations may be referred to herein as Z^{x}. The multivalent cations are preferably soluble in the aqueous ink vehicle and preferably exist in a substantially ionized state. The multivalent cations should be in a form where they are free and available to interact with ink components, in particular the SDP. A multivalent cation in unavailable form, for example Z^{x} tightly bound as a refractory oxide, is not considered a multivalent cation for the purposes of this invention.

Z^{x} includes, but is not limited to multivalent cations of the following elements: Mg, Ca, Sr, Ba, Sc, Y, La, Ti, Zr, V, Cr, Mn, Fe, Ru, Co, Rh, Ni, Pd, Pt, Cu, Au, Zn, Al, Ga, In, Sb, Bi, Ge, Sn, Pb. In one preferred embodiment, the multivalent cation comprises at least one of Mg, Ca, Sr, Ba and Zn. In yet another preferred embodiment, the multivalent cation comprises at least one of Ba, Ru, Co, Zn and Ga. In another preferred embodiment, Z^{x} comprises a trivalent cation. In yet another preferred embodiment, Z^{x} comprises Ca.

Z^{x} can be incorporated into ink by addition in a salt form or by addition in an alkaline form and used as a base in the adjustment of the ink pH. As with any dispersion, especially one that is ionically stabilized, the presence of large amounts of Z^{x} can be destabilizing. The effective levels of Z^{x} for the instant inks are below that which cause instability or other problems.

There is no particular lower limit of Z^{x}, although minimum levels contemplated by the instant invention are levels greater than trace or incidental amounts. Generally, there is at least about 2 ppm, commonly at least about 4 ppm, and even 10 ppm or more of multivalent in the ink. Likewise, there is no particular upper limit except as dictated by stability or other ink properties. At some level, though, there is no additional OD gain with increasing Z^{x}. In some cases, too much Z^{x} may cause the OD to decrease again. In general, beneficial effects are achieved with less than about 200 ppm of Z^{x}, and typically even less than about 100 ppm.

Although the preceding discussion of Z^{x} in terms of weight percent is provided for the sake of simple, concrete guidance, the appropriate levels of multivalent cations are related in a more complex way to factors such as molar equivalents, atomic weight and valence state; and also, to the amount SDP in the ink and its level of treatment.

Further details concerning the use of multivalent cations in inks such as the first ink(s) can be found, for example, in commonly owned USSN 10/447,932 (filed 29 May 2003, and claiming priority from US Provisional Application Serial No. 60/386,377, filed 6 June 2002), the disclosures of which are incorporated by reference herein for all purposes as if fully set forth.

When using a multivalent cation in the first ink(s) in combination with the fixing fluid, the amount of Cu in the fixing fluid may in certain circumstances actually be reduced, which has advantages for jettability. In addition, this combination may in certain circumstances allow for the reduction in pigment loading of the first ink while still achieving exceptionally high OD values.

### Vehicle

"Aqueous vehicle" refers to water or a mixture of water and at least one water-soluble organic solvent (co-solvent). Selection of a suitable mixture depends on requirements of the specific application, such as desired surface tension and viscosity, the selected colorant, drying time of the ink, and the type of substrate onto which the ink will be printed. Representative examples of water-soluble organic solvents that may be selected are disclosed in US5085698 (the disclosure of which is incorporated by reference herein for all purposes as if fully set forth).

If a mixture of water and a water-soluble solvent is used, the aqueous vehicle typically will contain about 30% to about 95% water with the balance (i.e., about 70% to about 5%) being the water-soluble solvent. Preferred compositions contain about 60% to about 95% water, based on the total weight of the aqueous vehicle.

The amount of aqueous vehicle in the ink is typically in the range of about 70% to about 99.8%, and preferably about 80% to about 99.8%, based on total weight of the ink.

The aqueous vehicle can be made to be fast penetrating (rapid drying) by including surfactants or penetrating agents such as glycol ethers and 1,2-alkanediols. Glycol ethers include ethylene glycol monobutyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n- propyl ether, and dipropylene glycol mono-isopropyl ether. 1,2-Alkanediols are preferably 1,2-C4-6 alkanediols, most preferably 1,2- hexanediol. Suitable surfactants include ethoxylated acetylene diols (e.g. Surfynols® series from Air Products), ethoxylated primary (e.g. Neodol® series from Shell) and secondary (e.g. Tergitol® series from Union Carbide) alcohols, sulfosuccinates (e.g. Aerosol® series from Cytec), organosilicones (e.g. Silwet® series from Witco) and fluoro surfactants (e.g. Zonyl® series from DuPont).

The amount of glycol ether(s) and 1,2-alkanediol(s) added must be properly determined, but is typically in the range of from about 1 to about 15% by weight and more typically about 2 to about 10% by weight, based on the total weight of the ink. Surfactants may be used, typically in the amount of about 0.01 to about 5% and preferably about 0.2 to about 2%, based on the total weight of the ink.

### Binder

According to one embodiment, a soluble polymer binder is used.

Soluble polymers may include linear homopolymers, copolymers or block polymers, they also can be structured polymers including graft or branched polymers, stars, dendrimers, etc. Optionally, the first ink may include dispersed polymers. The dispersed polymers can include latexes, polyurethane dispersions, etc. The polymers may be made by any known process including but not limited to free radical, group transfer, ionic, RAFT, condensation and other types of polymerization.

In a preferred embodiment, the binder polymers are linear and soluble in the vehicle. Preferably the number average molecular weight (Mₙ) is in the range of 1,000 to 20,000, more preferably 1,000 to 10,000 and most preferably 2,000 to 6,000. These soluble polymers are preferably ionic polymers, preferably anionic polymers with ionizable acid groups. The preferred acid content is between about 0.65 and about 2.9 milliequivalents per gram of polymer, and the most preferred being between about 0.90 and about 1.75 milliequivalents per gram of polymer. All polymers may also contain monomers that have hydrophilic groups including, but not limited to, hydroxyls, amides, and ethers.

In a particularly preferred embodiment, the soluble binder polymer is comprised substantially of monomers of (meth)acrylic acid and/or derivatives thereof, and the preferred Mₙ is between about 4000 to about 6000.

When present, soluble polymer is advantageously used at levels, based on the final weight of ink, of at least 0.3%and preferably at least about 0.6%. Upper limits are dictated by ink viscosity or other physical limitations. In a preferred embodiment, no more than about 3% soluble polymer is present in the ink, and even more preferably no more than about 2%, based on the total weight of the ink.

### Other Ingredients

Other ingredients may be formulated into the inkjet ink, to the extent that such other ingredients do not interfere with the stability and jetablity of the ink, which may be readily determined by routine experimentation. Such other ingredients are in a general sense well known in the art.

Biocides may be used to inhibit growth of microorganisms.

Inclusion of sequestering (or chelating) agents such as ethylenediaminetetraacetic acid (EDTA), iminodiacetic acid (IDA), ethylenediamine-di(o-hydroxyphenylacetic acid) (EDDHA), nitrilotriacetic acid (NTA), dihydroxyethylglycine (DHEG), trans-1,2- cyclohexanediaminetetraacetic acid (CyDTA), dethylenetriamine-N,N,N',N", N"-pentaacetic acid (DTPA), and glycoletherdiamine-N,N,N',N'-tetraacetic acid (GEDTA), and salts thereof, may be advantageous, for example, to eliminate deleterious effects of heavy metal impurities.

### Ink Properties

Jet velocity, separation length of the droplets, drop size and stream stability are greatly affected by the surface tension and the viscosity of the ink. Pigmented ink jet inks typically have a surface tension in the range of about 0,2 mN/cm (20 dyne/cm) to about 0.7 mN/cm (70 dyne/cm) at 25°C. Viscosity can be as high as 30 cP at 25°C, but is typically somewhat lower. The ink has physical properties compatible with a wide range of ejecting conditions, i.e., driving frequency of the piezo element, or ejection conditions for a thermal head, for either a drop-on-demand device or a continuous device, and the shape and size of the nozzle. The inks should have excellent storage stability for long periods so as not clog to a significant extent in an ink jet apparatus. Further, the ink should not corrode parts of the ink jet printing device it comes in contact with, and it should be essentially odorless and nontoxic.

Although not restricted to any particular viscosity range or printhead, the inventive ink set is particularly suited to lower viscosity applications such as those required by thermal printheads. Thus the viscosity (at 25°C) of the inventive inks and fixer can be less than about 7 mPa·s (7 cps), is preferably less than about 5 mPa·s (5 cps), and most advantageously is less than about 3.5 mPa·s (3.5 cps). Thermal inkjet actuators rely on instantaneous heating/bubble formation to eject ink drops and this mechanism of drop formation generally requires inks of lower viscosity.

### Fixing Fluid

A fixing fluid is an "ink" with fixing agent, but not necessarily colorant. The fixing agent in fixing fluid of the instant invention is a soluble copper compound. The fixing fluid is preferably jetted from an inkjet printhead. For the purposes of this invention, the fixing fluid is considered part of the "ink set" although, for sake of convenience and clarity, the term "ink" will generally be used herein to indicate an ink with colorant but no fixing agent. The fixing fluid can, if desired, contain colorant, but that may limit the application to the fixation of black ink only. Preferably, the fixing fluid contains substantially no colorant, or is substantially clear. Also, preferably, the fixing fluid can be printed on the substrate and leave no visible marking.

The fixing fluid contains an "effective amount" of the soluble copper salt which, as used above and otherwise herein, is an amount required to achieve an improvement in OD and/or rub-fastness as compared to an ink set without the presence of the fixer. The concentration of copper, preferably divalent copper (Cu²⁺), in the fixer fluid is preferably at least 0.05 mole/L, more preferably at least 0.1 mole/L, and still more preferably at least 0.3 mole/L. The upper limit of the concentration will generally be dictated by practical considerations as understood by those of ordinary skill in the art such as, for example, the preference that the fixer fluid is substantially colorless and/or leaves no visible marking on the printed substrate.

The copper is preferably a copper salt, most preferably a copper salt with high solubility in the fixer vehicle. Suitable copper salts include, but are not limited to, copper nitrate, copper sulfate, copper acetate and the like.

The fixer is preferably formulated for high spread and quick penetration and drying. To achieve these properties, surfactants and/or penetrating solvents will typically be employed. The surface tension is preferably less than about 40 mN/m.

The fixer will typically be deposited on the substrate before the ink, and preferably substantially only in areas subsequently printed with colored ink. The area covered by the fixer (area fill) need not, however, entirely fill the area printed with colored ink. Also, the ink need not fall (entirely) on top of the fixer. The area fill of unprinted fixer can be, and preferably is, substantially less than the area fill of overprinted ink. The need for only a small amount of fixer area fill is highly advantageous as this decreases the liquid load the substrate must handle. High liquid load can result in cockle or curl of paper substrate.

Preferably, the fixing fluid is applied at an area fill of less than about 60% of the area fill of the first ink, more preferably less than about 40% of such area fill, and even more preferably less than about 30% of such area fill.

### Substrate

The instant invention is particularly advantageous for printing on plain paper such as common electrophotographic copier paper.

### EXAMPLES

### Preparation of dispersion 1

Carbon black (S-160 from Degussa, surface area 150 m²/g) was oxidized with ozone according to the process described in WO01/94476 and neutralized with LiOH. After recovery, a 16.6 weight percent dispersion of self-dispersing carbon black pigment in water was obtained with a viscosity of 3.5 mPa·s (3.5 cps)(25°C). The median particle size was 110 nm and the acid number (degree of functionalization) was 3.3 µmol/m². The degree of functionalization, as measured, was slightly above the target level of <3.0 µmol/m².

The degree of functionalization (acid value) of this SDP (and others in these examples made by the process according to WO01/94476) was determined by the equivalent moles of base required to neutralize the treated pigment to a pH of 7. As the surface hydrophilic groups are substantially all acidic, the acid value also equals the degree of functionalization.

Equivalent moles of base can be determined by titration or, in the case of inorganic bases such as alkali metal hydroxides, by atomic absorption (AA) or Inductive Coupled Plasma (ICP) analysis. Moles of base per gram of SDP is obtained and converted to µmol/m² by dividing by the surface area of the pigment and adjusting the units appropriately. For accuracy, the neutralized sample must be free of contaminants, such as free acids or salts, which would interfere with the measurement.

### Preparation of dispersion 2

Pigment R122 (Clariant EWD) was oxidized with ozone according to the process described in WO01/94476. After recovery, a 14.6 weight percent dispersion of self-dispersing PR122 in water was obtained with a viscosity of 3 mPa·s (3.0 cps) (25°C). The median particle size was 118 nm.

### Preparation of dispersion 3

Carbon black (FW-18 from Degussa, surface area 260 m²/g) was oxidized with ozone according to the process described in WO01/94476. After recovery, a 17 weight percent dispersion of self-dispersing carbon black pigment in water was obtained with a viscosity of 6.4 mPa·s (6.4 cps)(25°C). The median particle size was 90 nm and the acid number (degree of functionalization) was less than 2.8 µmol/m2.

### Preparation of dispersion 4

Cabojet® 300 (a self-dispersing carbon black pigment from Cabot Corporation) was dispersed in water at 15 weight percent concentration.

### Preparation of dispersion 5

A polymer stabilized carbon black dispersion was prepared in a manner similar to example 3 in US5519085 except that soluble polymer binder 2, described hereinafter, was used as the dispersant.

### Preparation of soluble Polymer binder 1

A 3-liter flask was equipped with a mechanical stirrer, thermocouple, N2 inlet, condenser, drop funnel and syringe pump. Tetrahydrofuran (950g), 1,1-bis(trimethylsiloxy) 2-methyl propene (46.2g) and tetrabutylammonium m-chlorobenzoate (2g) was added into pot. Feed I (tetrahydrofuran (5g) and tetrabutylammonium m-chlorobenzoate (0.8g)) and Feed II (benzyl methacrylate (600g), 2-(trimethylsiloxy)ethyl methacrylate (312g), ethyltriethyleneglycol methacrylate (100g) and trimethylsilyl methacrylate (152g)) were started at time 0 minutes. Feed I was added over 200 minutes. Feed II was added over 60 minutes. After 360 minutes 90g of methanol was added to the pot. The pot was heated to reflux and 500g were distilled. A solution of water (124g) and dichloroacetic acid (0.2g) were added to the pot and refluxed for 60 minutes. After refluxing, 725g were distilled and 2-pyrrolidinone (889g) was added. This synthesis produced a random acrylic polymer of 60 wt% benzyl methacrylate, 20 wt% 2-hydroxyethyl methacrylate, 10 wt% ethyltriethyleneglycol methacrylate and 10 wt% methacrylic acid at a Mₙ of 5300. The final solution contained 52% polymer solids in 2-pyrrolidinone.

### Preparation of soluble Polymer binder 2

A block copolymer of methacrylic acid//benzyl methacrylate//ethyltriethyleneglycol methacrylate was prepared in a manner similar to "preparation 4" described in US5519085, except the mole ratio of monomers was (13//15//4). Number average molecular weight was about 5,000 and weight average molecular weight was about 6,000 g/mol.

### Preparation of soluble Polymer binder 3

A random copolymer of methacrylic acid/benzyl methacrylate/ethyltriethyleneglycol methacrylate/ (13/15/4 mole ratio) was made according to conventional polymerization techniques. Number average molecular weight was about 5,000 and weight average molecular weight was about 6,000 g/mol.

### Preparation of Ink

The ink formulations are shown in the following tables. Values are in weight percent of the final weight. Pigment was added as the dispersion.

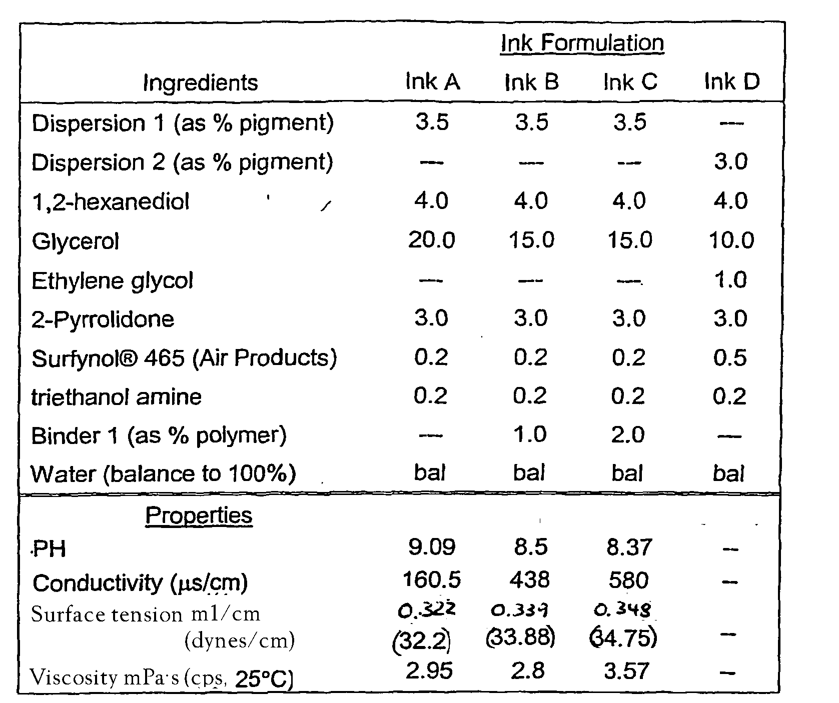

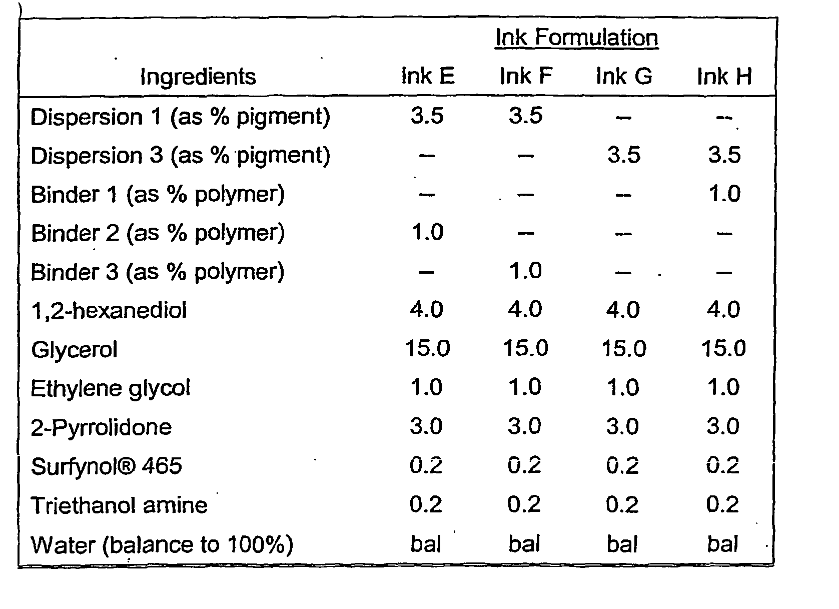

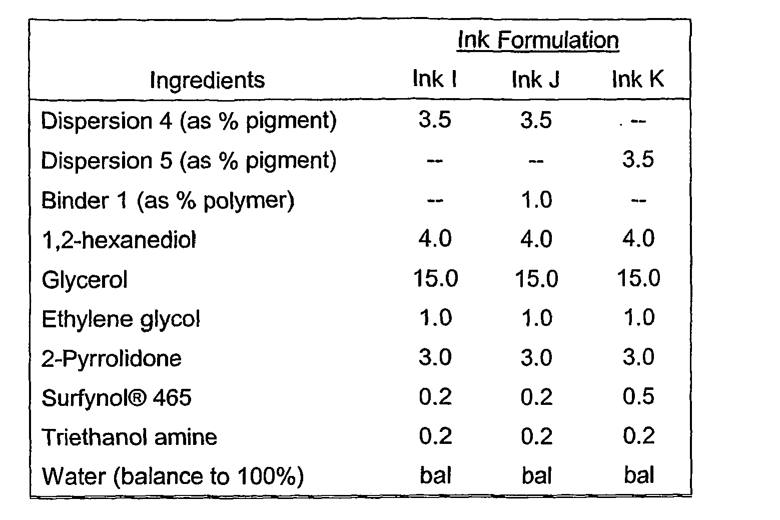

### Preparation of fixer fluids

Fixer fluids were prepared by mixing ingredients together according to the following recipe.

| Fixer Formulation | % weight |
|---|---|
| Fixing Agent | As indicated |
| Tetraethylene glycol | 6.0% |
| 2-pyrrolidone | 4.0% |
| 1-5 pentanediol | 10.0% |
| Tergitol 15-S-7 | 1.25% |
| Proxel | 0.25% |
| DI water | Balance |

Using this formulation, the following fixer fluids were prepared.

| Fixing Fluid | Fixing Agent (as a % weight of final fluid) |
|---|---|
| Fixer A1 | Calcium nitrate tetrahydrate (3.5%) |
| Fixer B1 | Calcium acetate monohydrate (2.6%) |
| Fixer C1 | Zinc acetate dihydrate (3.25%) |
| Fixer D1 | Copper nitrate (3.5%) |
| Fixer E1 | Polyethyleneimine (3.5%) |
| Fixer F1 | Calcium nitrate (3.5%) and PEI 3.5% |
| Fixer C2 | Zinc acetate (3.5%) |
| Fixer C3 | Zinc acetate (7%) |
| Fixer D2 | Copper nitrate (7%) |
| Fixer G1 | Aluminum nitrate nonahydrate (5.5%) |

Fixers A1, C1, D1 and E1 each contain the same amount, on a molar basis, of their respective multivalent cation (0.15 mol/L). Polyethyleneimine (PEI) was Lupasol® FS from BASF. Proxel® GXL is a biocide from Avecia Corporation. Tergitol® 15-S-7 is a surfactant from Niacet Corporation.

### Substrate

The following papers were used as substrate in print tests: Hammermill Copy Plus (HCP), Xerox 4024 (X4024) and Hewlett Packard office paper (Hpoff)

### Measurement of Optical Density and Chroma

OD and Chroma was measured using a Greytag-Macbeth SpectroEye (Greytag-Macbeth AG, Regensdorf, Switzerland). Fixer and ink was printed with a Canon S750 printer. Print patterns were created in CorelDraw (Corel Corporation) and the software was also used to control the area fill of the fixer. Fixer was printed at the desired area fill and covered the entire page. The page was then re-fed to the printer and the ink was then printed (100% area fill) on top of the fixer. Typically there was a period of 3 to 5 seconds between printing the fixer and printing the ink. Extending this period to 24 hours made no significant difference to the change in OD obtained.

### Measurement of Smear

Fixer and ink are printed as just described, but in this case, the ink pattern is a 4 mm-wide stripe. To determine smear, two strokes from a highlighter, one on top of the other, are drawn across the printed stripe. Suitable highlighter pens are available, for example, under the trademarks Hi-Liter® Highlighting Marker and Hi-Liter® Fluorescent Marker from Avery Dennison Corp. This process is carried out on different parts of the test pattern at 10 sec and 10 minutes after printing. The stripes are evaluated for smear-fastness by visual inspection according to the following scale - the best applicable ranking is applied.

Evaluation After 10 seconds:
Excellent - no smear after two strokes
Good - no smear after first stroke, slight smear after second stroke
Acceptable - slight smear after first stroke
Poor - Significant smear after first stroke.

### Example 1

This demonstrates the performance of inventive fixer D1 compared to other fixers. The comparative divalent metal fixing agents in A1, B1 and C1 are present at the same molar level as the copper in D1. The fixer was printed at 50% area fill; the black ink is printed on top.

| Optical Density - Ink A with and without fixer not in accordance with the invention | | | | | | |
|---|---|---|---|---|---|---|
| Paper | No Fixer (Comp.) | Fixer A1 (Comp.) | Fixer E1 (Comp.) | Fixer B1 (Comp.) | Fixer C1 (Comp.) | Fixer D1 |
| HCP | 1.23 | 1.50 | 1.57 | 1.53 | 1.51 | 1.55 |
| HPoff | 1.32 | 1.45 | 1.48 | 1.44 | 1.44 | 1.47 |
| X4024 | 1.31 | 1.45 | 1.48 | 1.44 | 1.49 | 1.49 |
| average | 1.29 | 1.47 | 1.51 | 1.47 | 1.48 | 1.50 |

| Optical Density - Ink B with and without fixer | | | | | | |
|---|---|---|---|---|---|---|
| Paper | No Fixer (Comp.) | Fixer A1 (Comp.) | Fixer E1 (Comp.) | Fixer B1 (Comp.) | Fixer C1 (Comp.) | Fixer D1 |
| HCP | 1.23 | 1.34 | 1.42 | 1.37 | 1.38 | 1.50 |
| HPoff | 1.23 | 1.28 | 1.35 | 1.35 | 1.34 | 1.44 |
| X4024 | 1.18 | 1.29 | 1.37 | 1.33 | 1.35 | 1.43 |
| average | 1.21 | 1.30 | 1.38 | 1.35 | 1.36 | 1.46 |

| Optical Density - Ink C with and without fixer | | | | | | |
|---|---|---|---|---|---|---|
| Paper | No Fixer (Comp.) | Fixer A1 (Comp.) | Fixer E1 (Comp.) | Fixer B1 (Comp.) | Fixer C1 (Comp.) | Fixer D1 |
| HCP | 1.23 | 1.25 | 1.28 | 1.23 | 1.26 | 1.24 |
| Hpoff | 1.19 | 1.21 | 1.24 | 1.19 | 1.21 | 1.27 |
| X4024 | 1.15 | 1.23 | 1.22 | 1.18 | 1.22 | 1.34 |
| average | 1.19 | 1.23 | 1.25 | 1.20 | 1.23 | 1.28 |

Optical density results show the inventive copper fixer gives consistently better (higher) OD than other fixers. The advantage is particularly great when binder is present in the ink (Inks B and C).

| Smear Evaluation - on HCP paper | | | | | |
|---|---|---|---|---|---|
| | No Fixer (Comp.) | Fixer A1 (Comp.) | Fixer B1 (Comp.) | Fixer C1 (Comp.) | Fixer D1 |
| Ink A | Good | Poor | Poor | Poor | Poor^{*} |
| Ink B | Good | Acceptable | Acceptable | Acceptable | Acceptable |

| Smear Evaluation - on Hpoff paper | | | | | |
|---|---|---|---|---|---|
| | No Fixer (Comp.) | Fixer A1 (Comp.) | Fixer B1 (Comp.) | Fixer C1 (Comp.) | Fixer D1 |
| Ink A | Good | Poor | Poor | Poor | Poor* |
| Ink B | Good | Acceptable | Acceptable | Acceptable | Acceptable |

| | | | | | |
|---|---|---|---|---|---|
| * not in accordance with the invention | | | | | |

Smear results show use of fixer with SDP ink lacking in binder (Ink A) decreases smear resistance. Performance was improved by adding binder (Ink B) but, with fixers other than the inventive fixer, OD is substantially decreased. Advantageously, the inventive fixer was much less insensitive to binder, providing a means for achieving both high OD and smear resistance.

### Example 2 (not in accordance with the invention)

This demonstrates the advantages of the inventive fixer with a magenta SDP. Inventive fixer D1 with copper salt gave better (higher) OD and chroma compared to fixer F1 with calcium salt and PEI.

| Optical Density - Ink D with and without fixer | | | |
|---|---|---|---|
| Paper | No Fixer (Comp.) | Fixer F1 (Comp.) | Fixer D1 |
| HCP | 1.02 | 1.24 | 1.16 |
| HPoff | 1.06 | 1.14 | 1.23 |
| X4024 | 1.07 | 1.18 | 1.27 |

| Chroma - Ink D with and without fixer | | | |
|---|---|---|---|
| Paper | No Fixer (Comp.) | Fixer F1 (Comp.) | Fixer D1 |
| HCP | 52.9 | 60.1 | 61.0 |
| Hpoff | 54.9 | 58.5 | 59.3 |
| X4024 | 55.0 | 58.5 | 60.6 |

### Example 3

Provided is comparison of OD for various fixers at several different percent area fills.

| OD values for ink with fixers at various area fill - on HCP | | | | | |
|---|---|---|---|---|---|
| | No Fill | 10% | 25% | 50% | 75% |
| Ink A* | 1.36 | | | | |
| Fixer C2 (Comp.) | | 1.39 | 1.45 | 1.56 | 1.63 |
| Fixer C3 (Comp.) | | 1.43 | 1.53 | 1.61 | 1.65 |
| Fixer F1 (Comp.) | | 1.48 | 1.57 | 1.59 | 1.61 |
| Fixer D2 | | - | 1.51 | 1.55 | 1.64 |
| Ink B | 1.22 | | | | |
| Fixer C2 (Comp.) | | 1.22 | 1.26 | 1.34 | 1.43 |
| Fixer C3 (Comp.) | | 1.23 | 1.32 | 1.36 | 1.43 |
| Fixer F1 (Comp.) | | 1.17 | 1.24 | 1.31 | 1.34 |
| Fixer D2 | | - | 1.50 | 1.54 | 1.60 |

| OD values for ink with fixers at various area fill - on HPoff | | | | | |
|---|---|---|---|---|---|
| | No Fill | 10% | 25% | 50% | 75% |
| Ink A* | 1.37 | | | | |
| Fixer C2 (Comp.) | | 1.37 | 1.39 | 1.48 | 1.57 |
| Fixer C3 (Comp.) | | 1.39 | 1.47 | 1.53 | 1.61 |
| Fixer F1 (Comp.) | | 1.45 | 1.51 | 1.56 | 1.58 |
| Fixer D2 | | - | 1.55 | 1.59 | 1.60 |
| Ink B | 1.21 | | | | |
| Fixer C2 (Comp.) | | 1.20 | 1.26 | 1.31 | 1.37 |
| Fixer C3 (Comp.) | | 1.23 | 1.27 | 1.36 | 1.44 |
| Fixer F1 (Comp.) | | 1.17 | 1.25 | 1.30 | 1.34 |
| Fixer D2 | | - | 1.49 | 1.54 | 1.60 |

| | | | | | |
|---|---|---|---|---|---|
| * not in accordance with the claimed invention | | | | | |

Results show that the inventive fixer achieved the highest OD with the lowest area fill, most notably, when binder is employed in the ink (i.e. Ink B). Lower area fill is advantageous because it imposes less liquid load on the substrate. At fixer fills greater than 75%, paper curl was severe.

### Example 4

This demonstrates the effect of copper concentration and area fill. Fixer D1 was 0.15 mole/L and Fixer D2 was 0.30 mole/L copper fixer.

| Optical Density - with % area fill and (mole/L Cu²⁺) of fixer | | | |
|---|---|---|---|
| | 50% (0.15) | 50% (0.30) | 25% (0.30) |
| Ink A* | 1.51 | 1.57 | 1.54 |
| Ink B | 1.47 | 1.54 | 1.50 |

A very rapid boost in OD with low area fill can be achieved with the inventive fixer. The high solubility and low viscosity of the copper nitrate solution makes this possible. The concentration of fixing agent and the fixer area fill can be optimized to achieve the desired level of print quality enhancement with the least liquid load.

### Example 5

Further demonstration of the advantage (higher OD) of the inventive fixer (D1) compared to fixers A1, C1, G1, E1, and to no fixer. Fixer was applied at 50% area fill.

| Optical Density - Ink E with and without fixer | | | | | | |
|---|---|---|---|---|---|---|
| Paper | No Fixer (Comp.) | Fixer A1 (Comp.) | Fixer C1 (Comp.) | Fixer G1 (Comp.) | Fixer E1 (Comp.) | Fixer D1 |
| HP Office | 1.36 | 1.42 | 1.40 | 1.41 | 1.36 | 1.56 |
| HCP | 1.40 | 1.48 | 1.47 | 1.48 | 1.39 | 1.57 |
| Xerox 4024 | 1.37 | 1.47 | 1.45 | 1.46 | 1.38 | 1.57 |

| Optical Density - Ink F with and without fixer | | | | | | |
|---|---|---|---|---|---|---|
| Paper | No Fixer (Comp.) | Fixer A1 (Comp.) | Fixer C1 (Comp.) | Fixer G1 (Comp.) | Fixer E1 (Comp.) | Fixer D1 |
| HP Office | 1.25 | 1.27 | 1.36 | 1.30 | 1.28 | 1.36 |
| HCP | 1.31 | 1.39 | 1.44 | 1.34 | 1.33 | 1.43 |
| Xerox 4024 | 1.29 | 1.38 | 1.47 | 1.38 | 1.34 | 1.42 |

| Optical Density - Ink G* with and without fixer | | | | | | |
|---|---|---|---|---|---|---|
| Paper | No Fixer (Comp.) | Fixer A1 (Comp.) | Fixer C1 (Comp.) | Fixer G1 (Comp.) | Fixer E1 (Comp.) | Fixer D1 |
| HP Office | 1.21 | 1.45 | 1.33 | 1.41 | 1.22 | 1.50 |
| HCP | 1.15 | 1.51 | 1.45 | 1.49 | 1.19 | 1.56 |
| Xerox 4024 | 1.24 | 1.50 | 1.43 | 1.43 | 1.25 | 1.55 |

| | | | | | | |
|---|---|---|---|---|---|---|
| * not in accordance with the claimed invention | | | | | | |

| Optical Density - Ink H with and without fixer | | | | | | |
|---|---|---|---|---|---|---|
| Paper | No Fixer (Comp.) | Fixer A1 (Comp.) | Fixer C1 (Comp.) | Fixer G1 (Comp.) | Fixer E1 (Comp.) | Fixer D1 |
| HP Office | 1.15 | 1.21 | 1.22 | 1.26 | 1.41 | 1.32 |
| HCP | 1.18 | 1.33 | 1.29 | 1.32 | 1.15 | 1.33 |
| Xerox 4024 | 1.18 | 1.31 | 1.32 | 1.33 | 1.15 | 1.34 |

| Optical Density - Ink I* with and without fixer | | | | | | |
|---|---|---|---|---|---|---|
| Paper | No Fixer (Comp.) | Fixer A1 (Comp.) | Fixer C1 (Comp.) | Fixer G1 (Comp.) | Fixer E1 (Comp.) | Fixer D1 |
| HP Office | 1.20 | 1.45 | 1.35 | 1.42 | 1.34 | 1.56 |
| HCP | 1.07 | 1.49 | 1.54 | 1.51 | 1.46 | 1.60 |
| Xerox 4024 | 1.19 | 1.47 | 1.43 | 1.46 | 1.50 | 1.67 |

| Optical Density - Ink J with and without fixer | | | | | | |
|---|---|---|---|---|---|---|
| Paper | No Fixer (Comp.) | Fixer A1 (Comp.) | Fixer C1 (Comp.) | Fixer G1 (Comp.) | Fixer E1 (Comp.) | Fixer D1 |
| HP Office | 1.13 | 1.36 | 1.30 | 1.35 | 1.27 | 1.42 |
| HCP | 1.09 | 1.42 | 1.46 | 1.43 | 1.34 | 1.58 |
| Xerox 4024 | 1.13 | 1.42 | 1.36 | 1.42 | 1.35 | 1.55 |

| | | | | | | |
|---|---|---|---|---|---|---|
| * not in accordance with the claimed invention | | | | | | |

### Comparative Example

Ink K with polymer-stabilized pigment (non-SDP) is applied with various fixers. In this case, fixer D1 containing copper salt does not stand out as being substantially better than other fixers.

| Optical Density - Ink K with and without fixer | | | | | | |
|---|---|---|---|---|---|---|
| Paper | No Fixer (Comp.) | Fixer A1 (Comp.) | Fixer C1 (Comp.) | Fixer G1 (Comp.) | Fixer E1 (Comp.) | Fixer D1 |
| HP Office | 1.03 | 1.27 | 1.16 | 1.24 | 1.01 | 1.28 |
| HCP | 0.96 | 1.40 | 1.23 | 1.37 | 0.93 | 1.33 |
| Xerox 4024 | 0.96 | 1.36 | 1.18 | 1.26 | 0.99 | 1.28 |

### Example 6

This example demonstrates the further advantage (higher OD) of formulating the SDP ink with multivalent cations and fixing the ink with the inventive fixer (D1).

Additional ink formulations were prepared by mixing ingredients together according to the following recipes. Fixer was applied at 50% area fill.

| Ink Formulation - weight percent | | | | | |
|---|---|---|---|---|---|
| Ingredients | Ink L1 | Ink L2 | Ink L3 | Ink L4 | Ink M |
| Dispersion 1 (as % pigment) | 3.0 | 3.0 | 3.0 | 3.0 | 3.0 |
| 1,2-hexanediol | 5.0 | 5.0 | 5.0 | 5.0 | 5.0 |
| Glycerol | 10.0 | 10.0 | 10.0 | 10.0 | 10.0 |
| Ethylene glycol | 1.0 | 1.0 | 1.0 | 1.0 | 1.0 |
| 2P | 3.0 | 3.0 | 3.0 | 3.0 | 3.0 |
| Surfynol465 | 0.2 | 0.2 | 0.2 | 0.2 | 0.2 |
| Binder 1 | - | - | - | - | 1.0 |
| Salt (as indicated) | - | 0.028 Ca(NO₃)₂ | 0.032 Cu(NO₃)₂ | 0.023 Al(NO₃)₃ | 0.014 Ca(NO₃)₂ |
| Water (balance to 100%) | | bal | bal | bal | bal |

| Optical Density Values - HCP | | | | |
|---|---|---|---|---|
| | No Fixer (Comp.) | Fixer A1 (Comp.) | Fixer E1 (Comp.) | Fixer D1 |
| Ink L1* | 1.32 | 1.55 | 1.53 | 1.53 |
| Ink L2 | 1.44 | 1.55 | 1.58 | 1.62 |
| Ink L3 | 1.42 | 1.54 | 1.59 | 1.59 |
| Ink L4 | 1.38 | 1.53 | 1.56 | 1.49 |
| Ink M | 1.21 | 1.39 | 1.30 | 1.49 |

| Optical Density - HPoff | | | | |
|---|---|---|---|---|
| | No Fixer (Comp.) | Fixer A1 (Comp.) | Fixer E1 (Comp.) | Fixer D1 |
| Ink L1* | 1.29 | 1.49 | 1.44 | 1.48 |
| Ink L2 | 1.38 | 1.51 | 1.53 | 1.57 |
| Ink L3 | 1.36 | 1.48 | 1.53 | 1.53 |
| Ink L4 | 1.34 | 1.48 | 1.46 | 1.58 |
| Ink M | 1.16 | 1.30 | 1.22 | 1.42 |

| | | | | |
|---|---|---|---|---|
| * not in accordance with the claimed invention | | | | |

Ink formulated with multivalent metal salt (inks L2-L4) and paired with the inventive fixer gave higher optical density than similar ink (Ink L1) without salt. This effect is absent, or less pronounced, with other fixers. Especially advantageous is the combination of Ink L2 (added calcium salt) and the inventive fixer.

Ink with soluble binder 1 could also be formulated with added calcium salt (Ink M) and a boost in optical density was again achieved. Attempts to make analogous formulations with binder 1 and copper or aluminum salt failed to yield a stable ink.

## Claims

1. An inkjet ink set comprising:
a first ink comprising a self-dispersing pigment colorant dispersed in a first aqueous-vehicle; and
a fixing fluid comprising a soluble copper salt in a second aqueous vehicle,
wherein said first ink further comprises a soluble polymer binder or/and an effective amount of a multivalent cation.

2. The ink set of claim 1 wherein the soluble polymer binder is a substantially linear, anionic polymer having a number average molecular weight in the range of 1,000 to 20,000.

3. The ink set of claim 1, further comprising at least four differently colored aqueous inks, at least one of the colored inks being a first ink.

4. The ink set of claim 3, further comprising at least four differently colored aqueous pigmented inks.

5. The ink set of claim 1, wherein the soluble copper in the fixing fluid is present at a level of at least 0.05 mole/L.

6. The ink set of claim 1, wherein the self-dispersing pigment in said first ink is self-dispersing carbon black pigment comprising anionic hydrophilic moieties.

7. The ink set of claim 6, wherein the anionic hydrophillic moieties on the self-dispersing carbon black pigment are primarily carboxyl groups.

8. A method of inkjet printing a substrate comprising the steps of jetting an ink set onto a substrate, the ink set comprising the ink set as set forth in any one or all of claims 1-7.

9. The method of claim 8, wherein the fixing fluid is jetted onto the substrate before the first ink, and the area of the substrate covered by the fixing fluid is substantially covered by the first ink.

10. The method of claim 9, wherein the area fill of the fixing fluid is less than the area fill of the first ink.

11. The method of claim 10, wherein the fixing fluid is applied at an area fill of less than about 60% of the area fill of the first ink.

## Patentansprüche

1. Tintenstrahldrucktintenkombination, umfassend:
eine erste Drucktinte, die einen selbstdispergierenden Pigmentfarbstoff umfasst, der in einem ersten wässrigen Träger dispergiert ist; und
ein Fixierungsfluid, das ein lösliches Kupfersalz in einem' zweiten wässrigen Träger umfasst, wobei die erste Drucktinte ferner ein lösliches Polymerbindemittel umfasst oder/und eine effektive Menge eines mehrwertigen Kations.

2. Drucktintenkombination nach Anspruch 1, wobei das lösliche Polymerbindemittel ein im Wesentlichen lineares, anionisches Polymer mit einem zahlengemittelten Molekulargewicht im Bereich von 1000 bis 20 000 ist.

3. Drucktintenkombination nach Anspruch 1, des Weiteren umfassend mindestens vier unterschiedlich gefärbte wässrige Drucktinten, wobei mindestens eine der gefärbten Drucktinten eine erste Drucktinte ist.

4. Drucktintenkombination nach Anspruch 3, des Weiteren umfassend mindestens vier unterschiedlich gefärbte, wässrige, pigmentierte Drucktinten.

5. Drucktintenkombination nach Anspruch 1, wobei das lösliche Kupfer in dem Fixierungsfluid in einer Menge von mindestens 0,05 Mol/L vorhanden ist.

6. Drucktintenkombination nach Anspruch 1, wobei das selbstdispergierende Pigment in der ersten Drucktinte selbstdispergierendes Kohleschwarzpigment ist, das anionische hydrophile Gruppen umfasst.

7. Drucktintenkombination nach Anspruch 6, wobei die anionischen hydrophilen Gruppen an dem selbstdispergierenden Kohleschwarzpigment primär Carboxylgruppen sind.

8. Verfahren für einen Tintenstrahldruck auf einem Substrat, umfassend die Schritte des Ausstoßens einer Drucktintenkombination auf ein Substrat, wobei die Drucktintenkombination die Drucktintenkombination umfasst, die in einem oder allen Ansprüchen 1 bis 7 beschrieben ist.

9. Verfahren nach Anspruch 8, wobei das Fixierungsfluid vor der ersten Drucktinte auf das Substrat ausgestoßen wird, und die Fläche des Substrats, die von dem Fixierungsfluids bedeckt ist, im Wesentlichen von der ersten Drucktinte bedeckt ist.

10. Verfahren nach Anspruch 9, wobei die Flächenfüllung mit dem Fixierungsfluid geringer ist als die Flächenfüllung mit der ersten Drucktinte.

11. Verfahren nach Anspruch 10, wobei das Fixierungsfluid bei einer Flächenfüllung von weniger als etwa 60% der Flächenfüllung der ersten Drucktinte aufgetragen wird.

## Revendications

1. Ensemble d'encres pour jet d'encre comprenant:
une première encre comprenant un colorant pigmentaire auto-dispersant dispersé dans un premier véhicule aqueux; et
un fluide fixant comprenant un sel soluble de cuivre dans un second véhicule aqueux, dans lequel ladite première encre comprend en outre un liant polymère soluble ou/et une quantité efficace d'un cation multivalent.

2. Ensemble d'encres selon la revendication 1, dans lequel le liant polymère soluble est un polymère anionique, sensiblement linéaire ayant un poids moléculaire moyen en nombre compris dans la plage de 1 000 à 20 000.

3. Ensemble d'encres selon la revendication 1, comprenant en outre au moins quatre encres aqueuses colorées différemment, au moins l'une des encres colorées étant une première encre.

4. Ensemble d'encres selon la revendication 3, comprenant en outre au moins quatre encres pigmentées aqueuses colorées différemment.

5. Ensemble d'encres selon la revendication 1, dans lequel le cuivre soluble dans le fluide fixant est présent à une teneur d'au moins 0,05 mole/L.

6. Ensemble d'encres selon la revendication 1, dans lequel le pigment auto-dispersant dans ladite première encre est du pigment de type noir de carbone auto-dispersant comprenant des fractions hydrophiles anioniques.

7. Ensemble d'encres selon la revendication 6, dans lequel les fractions hydrophiles anioniques sur le pigment de type noir carbone auto-dispersant sont principalement des groupes carboxyle.

8. Procédé d'impression par jet d'encre d'un substrat comprenant les étapes de projection d'un ensemble d'encres sur un substrat, l'ensemble d'encres comprenant l'ensemble d'encres tel qu'énoncé dans l'une quelconque ou toutes les revendications 1 à 7.

9. Procédé selon la revendication 8, dans lequel le fluide fixant est projeté sur le substrat avant la première encre, et la surface du substrat recouverte du fluide fixant est sensiblement recouverte de la première encre.

10. Procédé selon la revendication 9, dans lequel le remplissage de surface du fluide fixant est inférieur au remplissage de surface de la première encre.

11. Procédé selon la revendication 10, dans lequel le fluide fixant est appliqué à un remplissage de surface de moins d'environ 60 % du remplissage de surface de la première encre.
